Europäisches Patentamt

European Patent Office

Office européen des brevets

(11) Veröffentlichungsnummer: **0 325 684**

**A2**

(12) **EUROPÄISCHE PATENTANMELDUNG**

(21) Anmeldenummer: **88110514.2**

(22) Anmeldetag: **01.07.88**

(51) Int. Cl.⁴: **G01K 7/32 , G01K 1/02**

(30) Priorität: **24.12.87 DE 3744239**

(43) Veröffentlichungstag der Anmeldung:
**02.08.89 Patentblatt 89/31**

(84) Benannte Vertragsstaaten:
**CH DE FR GB IT LI NL**

(71) Anmelder: **Heraeus Sensor GmbH**
**Heraeusstrasse 12-14**
**D-6450 Hanau am Main(DE)**

(72) Erfinder: **Ziegler, Horst, Prof. Dr.**
**Steinhauser Weg 13**
**D-4790 Paderborn(DE)**
Erfinder: **Behlen, Horst**
**Lange Trift 21**
**D-4790 Paderborn-Dahl(DE)**

(74) Vertreter: **Heinen, Gerhard, Dr.**
**W.C. Heraeus GmbH Zentralbereich Patente**
**und Lizenzen Heraeusstrasse 12-14**
**D-6450 Hanau(DE)**

(54) **Elektronisches Thermometer.**

(57) Ein elektronisches Thermometer weist einen Oszillator auf, dessen frequenzbestimmendes Glied ein als Meßsonde ausgebildetes temperatursensitives piezoelektrisches Element ist, das in einem abgeschlossenen Gehäuse aus elektrisch isolierendem Material angeordnet ist; das piezoelektrische Element ist mit zwei Anschlußelektroden versehen, die über jeweils einen Kondensator mit der Oszillatorschaltung verbunden sind, wobei jeder der beiden Kondensatoren jeweils eine innerhalb und eine außerhalb des Gehäuses befindliche Elektrode aufweist.

EP 0 325 684 A2

## Elektronisches Thermometer

Die Erfindung betrifft ein elektronisches Thermometer mit einem Oszillator, dessen frequenzbestimmendes Glied ein als Meßsonde ausgebildeter mit zwei Anschlußelektroden versehenes temperatursensitives piezoelektrisches Element ist, von denen eine Anschlußelektrode über einen Kondensator von der Oszillatorschaltung galvanisch getrennt ist, die ihrerseits zur Ermittlung der Temperatur an eine Auswerteeinheit angeschlossen ist.

Aus der EP-PS 41 168 ist eine Temperaturmeßsonde mit einem Schwingquarz als temperatursensitives Element bekannt, das in einem abgeschlossenen Metallgehäuse untergebracht ist, welches beispielsweise Helium als Füllgas aufweist. Die durch die Gehäusewand geführten elektrischen Leitungsdurchführungen sind durch sie umgebende Glasmuffen abgedichtet und gegenüber der Gehäusewand elektrisch isoliert.

In der Praxis erweisen sich solche Abdichtungen insbesondere bei höheren Temperaturen aufgrund unterschiedlicher Wärmeausdehungskoeffizienten und wärmeempfindlicher Isolierstoffe als problematisch, so daß der obere Temperaturmeßbereich solcher Temperaturmeßsonden durch die Leitungsdurchführungen begrenzt ist; weiterhin sind solche Durchführungen in der Herstellung verhältnismäßig aufwendig.

Die Erfindung stellt sich die Aufgabe, eine hermetisch dichte Abschließung des temperatursensitiven piezoelektrischen Elements zum Schutz vor Alterung durch äußere Einflüsse zu schaffen, die eine verhältnismäßig einfache Herstellung sowie eine Erhöhung der Temperaturobergrenze bis zu einem Bereich von 350 bis 400 °C ermöglicht.

Die Aufgabe der Erfindung wird durch die kennzeichnenden Merkmale des Anspruchs 1 gelöst.

In einer bevorzugten Ausführungsform ist das temperatursensitiven piezoelektrischen Element durch eine elektrisch isolierende Gehäusewand von der Oszillatorschaltung getrennt, wobei die Anschlüsse des Elementes mit zwei flächigen, auf der Wand aufgebrachten bzw. in der Wand angeordneten Kondensatorelektroden verbunden sind, deren Gegenelektroden sich auf der anderen Seite der Gehäusewand befinden; dabei ist es möglich, diese Gegenelektroden ebenfalls flächig auf die Gehäusewand aufzubringen, so daß die Gehäusewand gleichzeitig als Dielektrikum eines so gebildeten Kondensators dient. Es ist jedoch auch möglich, bei einer ebenen Gehäusewand die Gegenelektroden translatorisch beweglich anzuordnen, so daß sie beispielsweise zu Testzwecken nacheinander durch Verschiebung eine Vielzahl von piezoelektrischen Elementen mit einer einzigen Oszillatorschaltung verbinden können. Weiterhin ist es möglich, das piezoelektrische Element in einem drehbar angeordneten Gehäuse unerzubringen und seine Anschlüsse mit in axialer Richtung nebeneinanderliegenden ringförmigen bzw. zylindermatnelförmigen Elektoden auf der Innenseite des Gehäuses zu verbinden; die kapazitive Anordnung wird durch entsprechend geformte feststehende Gegenelektroden in Form von Zylindermänteln oder Mantelsegmenten geschaffen. Als piezoelektriche Element wird vorzugsweise ein Schwingquarz eingesetzt, dessen Schnittwinkel so gewählt sind, daß die Resonanzfrequenz des Quarzes von der Temperatur abhängig ist. Es ist jedoch auch möglich, als temperatursensitives piezoelektrisches Element einen Kristall oder eine Keramik einzusetzen.

Als besonders vorteilhaft erweist sich die Möglichkeit der Anordnung des hermetisch abgeschlossenen piezoelektrischen Elementes in aggressiven Medien, wie z.B. Elektrolyten von Elektrolyseanlagen, wobei die elektronisch empfindlichen Teile der Oszillatorschaltung außerhalb des elektrolytischen Troges bzw. der Elektrolysezelle angeordnet sind. Weiterhin ist es als vorteilhaft anzusehen, daß der piezoelektrischen Element auf dem Läufer von rotorierenden Meßobjekten beispielsweise zur Temperaturmessung in rotierenden Wellen, zur Messung der Wicklungstemperatur in elektrischen Maschinen oder zur Messung in der Probenebene von rotierenden Wettertestgeräten, angeordnet sein kann, ohne daß hierzu eine leitende Verbindung über Schleifringe oder eine Funkverbindung erforderlich ist. Hier erweist es sich als besonders vorteilhaft, daß im rotierenden Teil außer dem piezoelektrischen Element keinerlei elektronische Bauelemente mit ihrem begrenzten Temperaturbereich enthalten sind, wie es beispielsweise bei optischer oder induktiver Fremdeinspeisung von Hilfsenergie in den rotierenden Teil erforderlich ist.

Im folgenden ist der Gegenstand der Erfindung anhand der Figuren 1, 2a, 2b, 3 und 4 näher erläutert. Dabei zeigt Figur 1 die prinzipielle Wirkungsweise des Gegenstandes der Erfindung, während die Figuren 2a und 2b im Ausschnitt das konstruktive Prinzip der durchführungsfreien Signalübertragung darstellen; die Figuren 3 und 4 zeigen die Anwendung der Erfindung bei rotierenden Systemen.

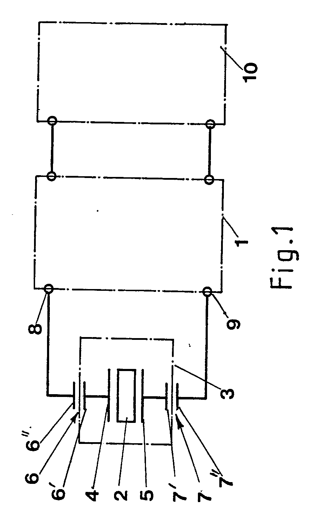

Gemäß Figur 1 befindet sich das als frequenzbestimmendes Glied eines Oszillators 1 dienende piezoelektrische Element 2 in einem hermetisch abgeschlossenen Gehäuse 3. Die mit den Anschlußelektroden 4, 5 des piezoelektrischen Elementes 2 verbundenen Elektroden 6', 7' der Kondensatoren 6, 7 befinden sich auf der Innenseite des Gehäuses 3, während die mit den Eingangsklemmen 8, 9 der Oszillatorschaltung 1 verbundenen Elektroden der Kondensatoren 6, 7 sich auf der Außenseite des Gehäuses 3 befindet. Die zwischen den Elektroden der beiden Kondensatoren 6, 7 befindliche Gehäusewand stellt somit das Dielektrikum bzw. einen Teil des Dielektrikums der Kondensatoren dar. An die Oszillatorschaltung 1 ist eine Auswerteeinheit 10 angeschlossen, welche anhand der Oszillatorfrequenz die Temperatur ermittelt und anzeigt bzw. zur Weiterverarbeitung aufbereitet. Die Ermittlung der Temperatur kann beispielsweise durch Vergleich der gemessenen Oszillatorfrequenz mit der Frequenz eines zweiten Oszillators erfolgen, der ein von der Temperatur unabhängiges Signal abgibt.

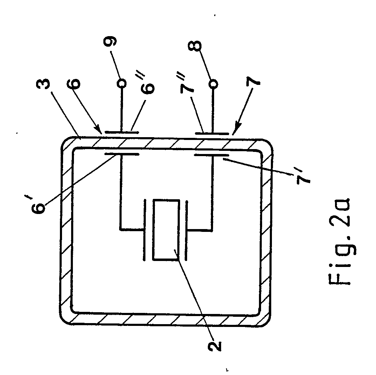

Figur 2a zeigt einen Querschnitt durch ein hermetisch dichtes Gehäuse 3, welches ein schematisch dargestelltes piezoelektrisches Element 2 enthält. Um eine Alterung des piezoelektrischen Elements zu vermeiden, ist das Gehäuse mit einem reinen Gas bzw. Gasgemisch, wie beispielsweise Stickstoff-Helium-Gemisch, gefüllt. Die Anschlüsse 4, 5 des piezoelektrischen Elementes 2 sind mit den im Gehäuse 3 befindlichen Elektroden $6'$, $7'$ der Kondensatoren 6, 7 verbunden, deren äußere Elektroden $6''$, $7''$ direkt gegenüber den inneren Elektroden auf der Außenfläche des Gehäuses 3 angeordnet sind. Das Gehäuse besteht ganz aus temperaturfestem Material, wobei zumindestens im Bereich der Kondensatoren 6, 7 isolierendes Material vorgesehen ist. In der Praxis haben sich als Gehäusematerialien insbesondere Glas, Quarzglas oder Keramik bewährt.

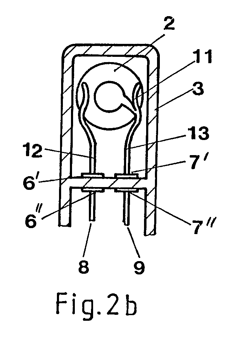

In Figur 2b ist im Querschnitt ein in der Praxis als Meßsonde einsetzbares Gehäuse mit einem piezoelektrischen Element dargestellt. Das piezoelektrische Element 2 befindet sich in einer Halterung 11, deren elektrisch leitende Halterungselemente 12, 13 direkt mit den Anschlüssen zu den Elektroden des Elementes 2 verbunden sind. Die Durchführung des Oszillatorsignals erfolgt hier, wie bereits zu Figur 2 erläutert, über die Kondensatoren 6, 7, deren innere Elektroden mit den Anschlußelektroden 4, 5 verbunden sind, während die äußeren Elektroden mit den zur Oszillatorschaltung führenden Anschlüssen 8, 9 verbunden sind.

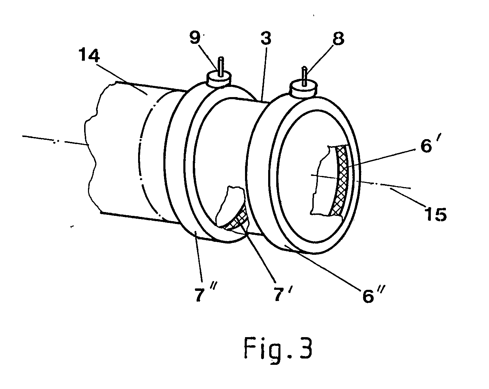

Figur 3 zeigt den Einsatz des erfindungsgemäßen elektronischen Meßsystems in einem rotierenden Meßobjekt, wie es beispielsweise durch eine rotierende Welle gegeben ist. Das piezoelektrische Element ist dabei beispielsweise in seinem Gehäuse 3 am Ende einer Welle 14 mit Drehachse 15 untergebracht, wobei die inneren Elektroden $6'$, $7'$ als ringförmig umlaufende Teile eines Zylindermantels ausgebildet sind. Das Gehäuse 3 wird auf der Außenseite von ebenfalls ringförmig ausgebildeten feststehenden Außenelektroden $6''$, $7''$ umgeben, welche zusammen mit den inneren Elektroden jeweils ein Kondensatorsystem 6, 7 bilden. Es ist jedoch auch möglich, anstelle der ringförmig umlaufenden äußeren Elektroden $6''$, $7''$ Segmente einzusetzen, die nur einen Teil des Umfanges umfassen. Die äußeren Elektroden sind über die Anschlüsse 8 und 9 mit der Oszillatorschaltung verbunden.

Nach dem gleichen Prinzip ist es möglich, ein piezoelektrisches Element als Temperaturmeßsonde auf dem Läufer einer elektrischen Maschine unterzubringen, wobei die Übertragung von der rotierenden Welle auf den stationär angeordneten Oszillator nach dem gleichen Prinzip funktioniert, wie es anhand der Figur 3 beschrieben ist. Dabei ist es möglich, auch ein ringmantelförmiges Gehäuse vorzusehen, das auf die Welle aufgeschoben wird, so daß die Wellenenden jeweils in einem Lager ruhen können.

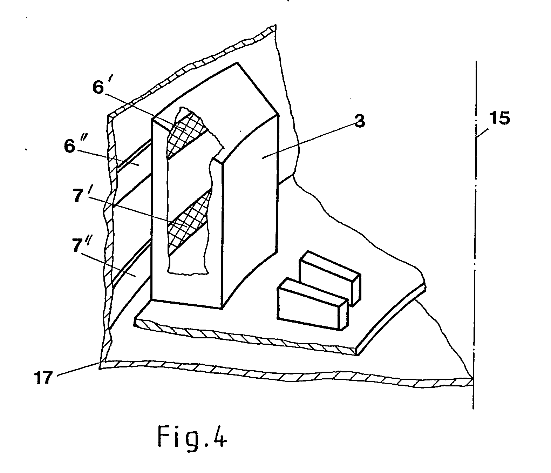

Weiterhin ist es möglich, gemäß Figur 4 das hermetisch abgeschlossene piezoelektrische Element in der Probenebene eines um eine Achse 15 rotierenden Probenträgers in einem Wettertestgerät einzusetzen, wobei auf die Meßsonde die unterschiedlichen Wärmequellen entlang der Umlaufbahn einwirken. Gemäß der ausschnittsweisen Darstellung eines solchen Wettertestgerätes weist die feststehende Gehäusewand 17 zwei zueinander axial angeordnete umlaufende ringförmige Kondensatorelektroden $6''$, $7''$ auf, die als Gegenelektroden zu den im Gehäuse 3 auf dem Träger befindlichen Elektroden $6'$, $7'$ dienen, die in diesem Fall die Form von Mantelsegmenten aufweisen. Auf diese Weise ist es möglich, insbesondere bei Langzeitversuchen auf elektronische Thermometer mit einer eigenen Stromversorgung zu verzichten.

## Ansprüche

1. Elektronisches Thermometer mit einem Oszillator, dessen frequenzbestimmendes Glied ein als Meßsonde ausgebildeter mit zwei Anschlußelektroden versehenes temperatursensitives piezoelektrisches Element ist, von denen eine Anschlußelektrode über einen Kondensator von der Oszillatorschaltung galvanisch getrennt ist, die ihrerseits zur Ermittlung der Temperatur an eine Auswerteeinheit angeschlossen ist, dadurch gekennzeichnet, daß das piezoelektrische Element (2) in einem abgeschlossenen Gehäuse (3) aus elektrisch isolierendem Material angeordnet ist, daß die zweite Anschlußelektrode (5) ebenfalls von der Oszillatorschaltung (1) über einen Kondensator (7) galvanisch getrennt ist, wobei jeder Kondensator (6, 7) jeweils eine innerhalb und eine außerhalb des Gehäuses (3) befindliche Elektroden aufweist.

2. Elektronisches Thermometer nach Anspruch 1, dadurch gekennzeichnet, daß als temperatursensitives piezoelektrisches Element (2) ein Kristall eingesetzt ist.

3. Elektronisches Thermometer nach Anspruch 1, dadurch gekennzeichnet, daß als tempertursensitives piezolektrisches Element (2) ein Schwingquarz eingesetzt ist.

4. Elektronisches Thermometer nach Anspruch 1, dadurch gekennzeichnet, daß das Gehäuse (3) aus Glas, Quarzglas oder Keramik besteht.

5. Elektronisches Thermometer nach Anspruch 1 oder 4, dadurch gekennzeichnet, daß die außerhalb des Gehäuses (3) befindlichen Elektroden beider Kondensatoren gegenüber ihren jeweiligen Gegenelektroden bewegbar sind.

6. Elektronisches Thermometer nach Anspruch 5, dadurch gekennzeichnet, daß die Elektroden gegenüber ihren jeweiligen Gegenelektroden in translatorischer oder rotatorischer Richtung bewegbar sind.

7. Elektronisches Thermometer nach einem oder mehreren der Ansprüche 1 bis 6, dadurch gekennzeichnet, daß die Anschlußelektroden (4, 5) des piezoelektrischen Elements (2) mit zwei flächigen, auf oder in der Wand des Gehäuses (3) angeordneten Elektroden (6', 7') verbunden sind, deren Gegenelektroden (6'', 7'') sich auf der anderen Seite der Gehäusewand befinden.

8. Elektronisches Thermometer nach Anspruch 7, dadurch gekennzeichnet, daß die äußeren Elektroden (6'', 7'') gegenüber den inneren Elektroden (6', 7') fest auf der äußeren Seite der Gehäusewand aufgebracht sind.

9. Elektronisches Thermometer nach Anspruch 7, dadurch gekennzeichnet, daß das Gehäuse (3) zylindersymmetrisch ausgebildet ist und auf einer drehbaren Welle montierbar ist, wobei die inneren Elektroden (6', 7') als zueinander axiale Ringmäntel ausgeführt sind und daß deren Gegenelektroden (6'', 7'') wenigstens teilweise als ortsfeste Ringmäntel ausgebildet sind, die das Gehäuse (3) umfassen.

10. Elektronisches Thermometer nach Anspruch 9, dadurch gekennzeichnet, daß die Gegenelektroden (6'', 7'') als Ringsegmente ausgebildet sind.

11. Elektronisches Thermometer nach Anspruch 7, dadurch gekennzeichnet, daß die inneren Elektroden (6', 7') als Ringsegmente eines auf einer Kreisbahn bewegten Gehäuses (3) ausgebildet sind, wobei die Gegenelektroden (6'', 7'') die Kreisbahn umfassen.

Fig.1

EP 0 325 684 A2

Fig. 2a

EP 0 325 684 A2

Fig. 2b

EP 0 325 684 A2

Fig.3

Fig.4

15

3

6'

6''

7'

7''

17